# EUROPÄISCHE PATENTSCHRIFT

(11) **EP 1 220 628 B1**
(45) Veröffentlichungstag und Bekanntmachung des Hinweises auf die Patenterteilung: **12.05.2004**
(21) Anmeldenummer: 00966087.9
(22) Anmeldetag: 29.09.2000
(51) Int. Cl.: A47C 31/02

(54) **BEFESTIGUNGSELEMENT ZUM VERBINDEN EINES POLSTERBEZUGS MIT EINEM POLSTER**
FASTENING ELEMENT FOR LINKING A UPHOLSTERY COVER WITH AN UPHOLSTERY
ELEMENT DE FIXATION POUR RELIER UN GARNISSAGE ET UN REMBOURRAGE

(30) Priorität: 04.10.1999 DE 29917372 U
(43) Veröffentlichungstag der Anmeldung: 10.07.2002
(73) Patentinhaber: Johnson Controls GmbH & Co. KG, 32339 Espelkamp (DE)
(72) Erfinder: STEINMEIER, Horst, 32312 Lübbecke (DE); ERLER, Andreas, 94333 Geiselhöring (DE)
(74) Vertreter: KEIL & SCHAAFHAUSEN Patentanwälte
(86) Internationale Anmeldenummer: PCT/EP2000/009539
(87) Internationale Veröffentlichungsnummer: WO 2001/024665

(56) Entgegenhaltungen:
- EP-A- 0 433 100
- DE-U- 9 316 093
- US-A- 3 794 378

## Beschreibung

Die Erfindung betrifft ein Befestigungselement zum Verbinden eines Polsterbezugs, insbesondere des Sitzbezugs eines Fahrzeugsitzes, mit einem Schaumpolsterelement, nach dem Oberbegriff des Anspruchs 1.

Rückenlehnen, Sitzflächen und dgl. von Fahrzeugsitzen werden zunehmend mit Schaumteilen aus Polyurethan (PUR) gepolstert und anschließend mit Bezügen aus Stoff, Leder oder dgl. überzogen. Zur Herstellung der Schaumteile wird flüssiges Polyurethan in eine Form eingespritzt, die anschließend geschlossen und beheizt wird, so dass das Polyurethan aufschäumt und das Schaumteil die gewünschte Form erhält. Damit an dem Sitz bzw. dem Schaumteil die Bezüge befestigt werden können, sind in dem Schaumteil sogenannte Einlege- oder Gamierdrähte oder auch Kunststoffprofilleisten aus Schaumstoff eingeschäumt, an denen entsprechende in den Bezügen vorgesehene Drähte, aufklemmbare Ringe oder dgl. befestigbar sind. Die Garnierdrähte oder Kunststoffprofilleisten werden vor dem Einbringen des flüssigen Polyurethans in die Form eingelegt und über Magnete oder Haltevorrichtungen an den entsprechenden Stellen in der Form gehalten, damit sie beim Einspritzen und Aufschäumen des Polyurethans nicht verschoben werden. Die Garnierdrähte oder Kunststoffprofilleisten werden dabei vollständig in das Schaumteil eingeschäumt, wobei lediglich an den Haltepunkten Freiräume verbleiben, die einen Zugang zu den Drähten oder Leisten zum anschließenden Befestigen der Bezüge ermöglichen. Die hierfür verwendeten Befestigungsteile, die die Verbindung zwischen dem im Polster gehaltenen Einlegeteil und korrespondierenden Halteelementen auf der Innenseite des Polsterbezugs herstellen, sind bspw. ringähnliche Teile, die manuell mit den Einlegeteilen im Polster verbunden werden müssen. Diese Arbeit ist relativ mühsam, zeitaufwendig und daher teuer.

Um eine schnellere und rationellere Anbringung der Befestigungselemente und gleichzeitig eine schnelle Montage und zerstörungsfreie Demontage des Polsterbezugs am Polster zu ermöglichen, wurde in der DE 195 30 279 C2 ein Befestigungselement vorgeschlagen, das zwei an dem mit dem Schaumpolsterelement verbundenen Einlegeteil befestigte Bügel aufweist, die einen stabartig verdickten Stirnkantenbereich eines Profil- oder Haltebandes übergreifen. An dem Profilband sind die Ränder aneinanderstoßender Polsterbezüge bzw. Polsterbezugsbereiche befestigt. Die Bügel durchgreifen eine oberhalb des verdickten Stirnkantenbereiches vorgesehene Aussparung des Haltebandes und sind bei einer Ausführungsform in Fixierungslage miteinander verharkt. Bei einer anderen Ausführungsform liegt der eine, den Stirnkantenbereich des Haltebandes übergreifende Bügel an dem anderen Bügel an.

Aus der DE 298 21697 U1 ist eine Befestigungsvorrichtung bekannt, bei der ein Kunststoffhalter das eingeschäumte Einlegeteil mit einem unteren Schenkel untergreift und zwei von dem unteren Schenkel in Richtung auf das Profilband aufsteigende Schenkel aufweist. Zwischen den Haltebereichen ist ein von dem Profilband durchsetzter Längsspalt gebildet, dessen Breite geringer ist als die Dicke des verdickten Stirnkantenbereiches des Profilbandes. Die Schenkel sind quer zum Spalt elastisch ausgebildet, so dass sie beim Einführen des Profilbandes elastisch nach außen ausweichen und den verdickten Stirnkantenbereich in den Kunststoffhalter eintreten lassen. Wenn der verdickte Stimkantenbereich den aufgebogenen zentralen Längsspalt durchtreten hat, federn die Seitenschenkel des Kunststoffhalters wieder nach innen und halten den Stirnkantenbereich über die nach innen weisenden Halteabschnitte.

Beide vorbekannten Befestigungselemente setzen die Verwendung eines Einlegeteiles voraus, wie es bspw. aus der DE 44 46 450 C1 bekannt ist. An diesem Einlegeteil werden die Befestigungselemente befestigt und mit dem Einlegeteil in das Schaumteil eingeschäumt.

Aus der US-A 3,794,378 ist ein Befestigungselement nach dem Oberbegriff des Anspruchs 1 bekannt. Bei dieser bekannten Sitzanordnung ist an dem Polsterbezug ein stegförmiges Halteelement angebracht, an dessen freien Ende Vorsprünge ausgebildet sind, welche in einen kastenförmigen Abschnitt eines in das Polster eingeschäumten Ankerelementes eingreifen ist. Der obere Bereich des kastenförmigen Abschnitts wird durch Haltelippen begrenzt, die elastisch ausweichen, wenn das Halteelement mit dem Polsterbezug in das Ankermittel eingepresst wird. Ein Lösen des Halteelementes wird durch die Haltelippen verhindert, die an den Vorsprüngen des Halteelementes angreifen. An dem aus Kunststoff extrudierten länglichen Ankerelement sind Flansche einstückig angeformt, die Aussparungen aufweisen. Beim Einschäumen des Ankerelementes in das Polster werden die Aussparungen von dem Formschaum durchdrungen, so dass das Ankerelement fest in dem Polster gehalten wird.

Aufgabe der Erfindung ist es, die Ausgestaltung und Anbringung der Befestigungselemente zu vereinfachen.

Diese Aufgabe wird mit der Erfindung im Wesentlichen durch die Merkmale des Anspruchs 1 gelöst.

Anstelle des gesonderten Einlegeteiles, das in das Schaumteil eingeschäumt wird, wird nun das Befestigungselement selbst mit dem daran vorgesehenen Netzwerk oder dgl. in die Form zur Herstellung des Schaumteiles eingelegt und mit Polyurethan oder dgl. umschäumt. Der gesonderte Arbeitsgang einer Verbindung des Befestigungselementes mit dem Einlegeteil entfällt. Das Netzwerk muss hierbei so weit über das Clipelement hinausragen, dass eine ausreichende Durchtränkung mit dem Schaummaterial ermöglicht wird. Nur so können die erforderlichen Ausreißkräfte erreicht werden. Um eine sichere Halterung des Profilbandes an dem Befestigungselement zu gewährleisten, ist vorgesehen, dass das Clipelement im Wesentlichen U-förmig mit zwei von einem unteren Schenkel in Richtung auf das Profilband aufsteigenden Seitenschenkeln ausgebildet ist, die an ihren oberen Enden nach innen gekrümmte Haltebereiche aufweisen, zwischen denen ein vom Profilband durchsetzter Längsspalt gebildet ist, dessen Breite geringer ist als die Dicke des verdickten Stirnkantenbereiches des Profilbandes. Erfindungsgemäß sind die Seitenschenkel entlang einer Achse A des Längsspaltes versetzt zueinander angeordnet. Hierdurch lässt sich das Profilband leichter einführen.

Eine besonders einfache Verbindung des Netzwerkes, Gewebes oder dgl. mit dem Clipelement erfolgt durch Verkleben oder Verschweißen. Hierbei besteht das Netzwerk, Gewebe oder dgl. vorzugsweise aus Polyethylen, Jute, Gaze, Vlies oder dgl., so dass gewährleistet wird, dass bei einfacher Herstellbarkeit des Netzwerkes oder dgl. eine zuverlässige Verbindung zu dem umschäumenden Polyurethan erreicht wird.

Die Durchtränkung und Verbindung mit dem umschäumenden Polyurethan wird erfindungsgemäß dadurch gefördert, dass das Netzwerk, Gewebe oder dgl. grobmaschig ist.

Erfindungsgemäß ist das Netzwerk oder dgl. an dem unteren Schenkel des Clipelementes befestigt, um die Montage des an dem Polsterbezug befestigten Profilbandes nicht zu behindern.

Das Einführen des Profilbandes in das Clipelement wird erfindungsgemäß dadurch erleichtert, dass die aufsteigenden Schenkel quer zum Längsspalt elastisch ausgebildet sind, wobei die Elastizität vorzugsweise durch an den unteren Schenkeln angrenzende Aussparungen der Seitenschenkel erhöht wird.

In Weiterbildung der Erfindung wird die Stabilität des Clipelementes dadurch erhöht, dass der untere Schenkel die Seitenschenkel in Axialrichtung überragt und dass an dem unteren Schenkel in axialer Verlängerung der Seitenschenkel nach oben weisende Stege ausgebildet sind.

Die Erfindung erstreckt sich auch auf ein Schaumteil, insbesondere zur Verwendung als Auflage für Rückenlehnen, Sitzflächen oder dgl. von Fahrzeugsitzen, in das die oben beschriebenen Befestigungselemente für die Befestigung von Polsterbezügen eingeschäumt werden.

Weiterbildungen, Vorteile und Anwendungsmöglichkeiten der Erfindung ergeben sich auch aus der nachfolgenden Beschreibung von Ausführungsbeispielen und der Zeichnung.

Es zeigen:
- Fig. 1: eine perspektivische Darstellung eines nicht erfindungsgemäßen Befestigungselements,
- Fig. 2: eine Vorderansicht des Befestigungselements gemäß Fig. 1 mit angedeutetem Profilband des Polsterbezuges,
- Fig. 3: eine schematische Darstellung des in einem Schaumteil eingeschäumten Befestigungselementes mit daran befestigtem Polsterbezug,
- Fig. 4a: eine perspektivische Ansicht eines Befestigungselements gemäß der Erfindung und
- Fig. 4b: eine Draufsicht auf das Clipelement der Ausführungsform gemäß Fig. 4a.

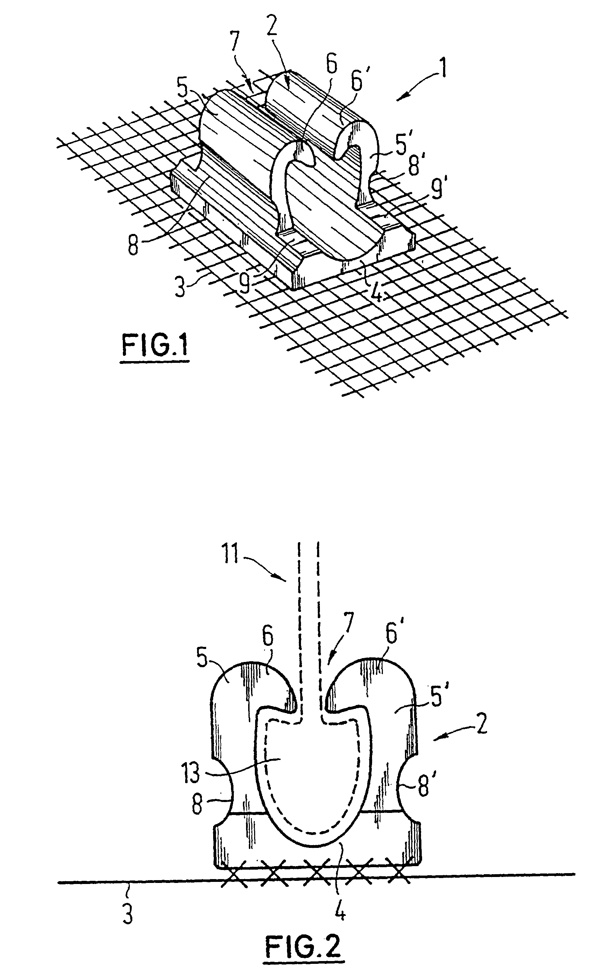

Ein in den Fig. 1 bis 3 dargestelltes Befestigungselement 1, das zur Befestigung von Bezügen an Polstern für Rückenlehnen oder dgl. von Fahrzeugsitzen eingesetzt wird, besteht aus einem Clipelement 2 und einem an diesem befestigten Netzwerk oder Gewebe 3.

Das Clipelement 2 ist im Wesentlichen U-förmig mit einem unteren Schenkel 4 und von diesem nach oben weisenden Seitenschenkeln 5, 5' ausgebildet. Die zur Oberseite des Polsters weisenden Seitenschenkel 5, 5' weisen jeweils nach innen gebogene Halteabschnitte 6, 6' auf, die zwischen sich einen entlang der Längsachse A des Clipelementes 2 verlaufenden Längsspalt 7 freilassen. Auf der nach außen weisenden Seite der Schenkel 5, 5' ist angrenzend an dem unteren Schenkel 4 jeweils eine Aussparung 8, 8' zur Erhöhung der Elastizität der Schenkel 5, 5' ausgebildet. Der untere Schenkel 4 ragt in Axialrichtung jeweils über die Seitenschenkel 5, 5' hinaus und weist in Verlängerung der Schenkel 5, 5' nach oben weisende Stege 9, 9' auf, über die die Stabilität des Clipelements 2 erhöht wird.

Das Netzwerk oder Gewebe 3 ist an der Unterseite des unteren Schenkels 4 bspw. durch Verkleben oder Verschweißen befestigt und überragt das Clipelement 2 vorzugsweise in allen vier Richtungen seiner Erstreckungsebene.

Das Netzwerk oder Gewebe 3 besteht aus Polyethylen, Jute, Gase, Vlies oder dgl. und ist vorzugsweise grobmaschig ausgebildet, um ein Durchtränken mit und Einschäumen in das Polstermaterial zu gewährleisten.

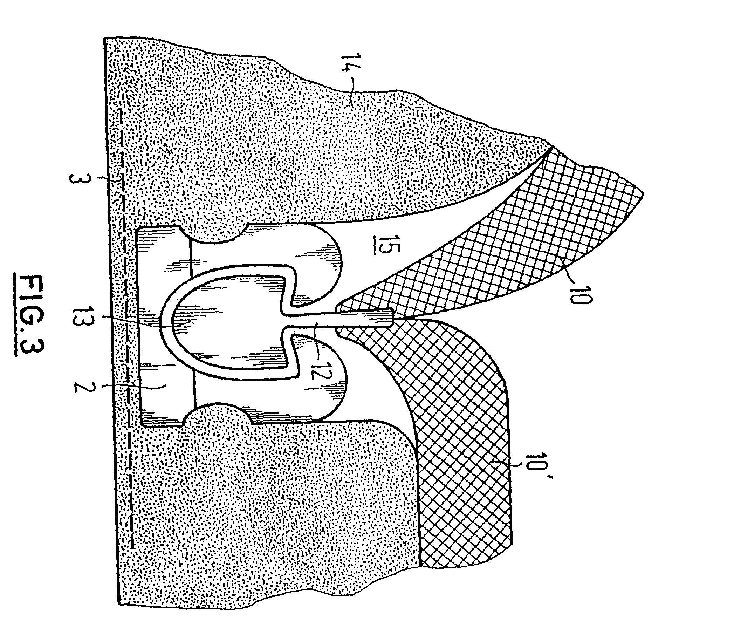

Wie sich aus Fig. 3 ergibt, ist an Polsterbezügen oder -bezugsbereichen 10, 10' ein Profilband 11 befestigt, insbesondere angenäht. Das Profilband 11 besteht aus einer insbesondere durchgängig ausgebildeten Leiste 12, an der die Polsterbezüge 10, 10' befestigt sind und einem an dem den Polsterbezügen 10, 10' gegenüberliegenden Ende vorgesehenen verdickten Stirnkantenbereich 13 für die Verbindung mit dem Befestigungselement 1.

Bei der Herstellung eines in Fig. 3 angedeuteten Schaumpolsterelement oder Schaumteiles 14 werden zunächst die aus Clipelement 2 und Netzwerk 3 bestehenden Befestigungselemente 1 in eine nicht dargestellte Form eingesetzt und dort über entsprechende Haltevorrichtungen gehalten. Anschließend wird flüssiges Polyurethan eingespritzt und die Form geschlossen und erwärmt, so dass das Polyurethan aufschäumt und die Befestigungselemente 1 einschäumt. Hierbei wird im Bereich des Clipelementes 2 ein von oben zugänglicher Freiraum ausgebildet, über den später der Profilband 11 in das Befestigungselement 1 eingeführt werden kann. Das an der Unterseite des Clipelementes 2 befestigte Netzwerk oder Gewebe 3 wird dagegen in dem das Clipelement 2 überragenden Bereich von dem flüssigen Polyurethan durchtränkt und beim Erwärmen eingeschäumt, so dass es fest in dem Schaumteil 14 gehalten wird.

Bei der Montage des Polsterbezuges wird der verdickte Stirnkantenbereich 13 des an dem Polsterbezug 10, 10' befestigten Profilbandes 11 in den Längsspalt 7 des Clip-elements 2 eingeführt. Da der Längsspalt 7 eine geringere Breite aufweist, als der verdickte Stirnkantenbereich 13 des Profilkantes 11 werden die Schenkel 5, 5' elastisch nach außen gebogen, so dass der Stirnkantenbereich in das Clipelement 2 eintreten kann. Wenn der Stirnkantenbereich 13 den aufgebogenen Längsspalt 7 durchtreten hat, federn die Seitenschenkel 5, 5' des Clipelementes 2 wieder nach innen und halten das Profilband 11 über die Halteabschnitte 6, 6'.

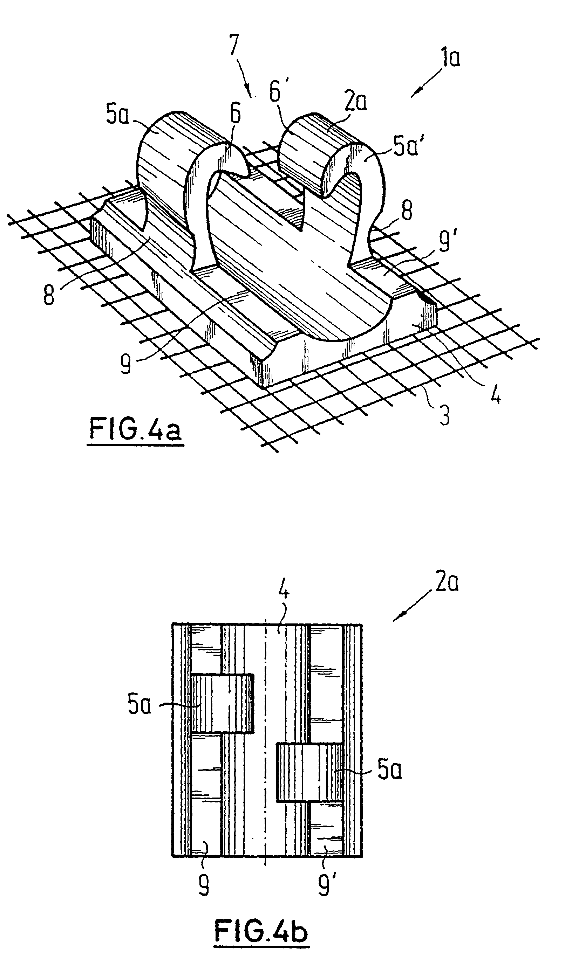

Bei der in Fig. 4 gezeigten Befestigungselement gemäß der Erfindung sind die Seitenschenkel 5a, 5a' des Befestigungselements 1a entlang der Längsachse A des Befestigungselementes 1a versetzt angeordnet. Hierdurch wird ein Einführen des Profilbandes in das Clipelement 2a erleichtert. Im übrigen entspricht das Befestigungselement 1a der ersten Ausführungsform gemäß den Fig. 1 bis 3, so dass bei Verwendung gleicher Bezugszeichen für entsprechende Elemente auf eine erneute detaillierte Beschreibung dieser Einzelheiten verzichtet wird.

Mit der Erfindung wird zum einen eine einfache Befestigung des Profilbandes an dem Befestigungselement, zum anderen aber auch ein einfaches Anbringen des Befestigungselementes in dem Schaumteil erreicht.

### Bezugszeichenliste

- 1, 1a: Befestigungselement
- 2, 2a: Clipelement
- 3: Netzwerk, Gewebe
- 4: unterer Schenkel
- 5, 5': Seitenschenkel
- 5a, 5a': Seitenschenkel
- 6, 6': Halteabschnitt
- 7: Längsspalt
- 8, 8': Ausnehmung
- 9,9': Steg
- 10, 10': Polsterbezug
- 11: Profilband
- 12: Leiste
- 13: Stirnkantenbereich
- 14: Schaumteil
- 15: Freiraum

- A: Längsachse

## Patentansprüche

1. Befestigungselement zum Verbinden eines Polsterbezuges (10, 10'), insbesondere des Sitzbezuges eines Fahrzeugsitzes, mit einem Schaumpolsterelement (14), mit einem Clipelement (2, 2a), das mit Haltebereichen (6, 6') einen verdickten Stimkantenbereich (13) eines Profilbandes (11) oder dgl. übergreift, an dem der Polsterbezug (10, 10') befestigt ist, wobei das Clipelement (2, 2a) im Wesentlichen U-förmig mit zwei von einem unteren Schenkel (4, 4a) in Richtung auf das Profilband (13) aufsteigenden Seitenschenkeln (5, 5', 5a, 5a') ausgebildet ist, die an ihren oberen Enden nach innen ragende Haltebereiche (6, 6') aufweisen, zwischen denen ein vom Profilband (11) durchsetzter Längsspalt (7) gebildet ist, dessen Breite geringer ist als die Dicke des verdickten Stirnkantenbereiches (13) des Profilbandes (11), und wobei an dem Clipelement (2, 2a) ein über das Clipelement (2, 2a) hinausragendes Netzwerk, Gewebe oder dgl. (3) befestigt ist, über welches das Befestigungselement (1, 1 a) in dem Schaumpolsterelement (14) gehalten werden kann, **dadurch gekennzeichnet, dass** die Seitenschenkel (5a, 5a') entlang einer Achse A des Längsspaltes (17) versetzt zueinander angeordnet sind.

2. Befestigungselement nach Anspruch 1, **dadurch gekennzeichnet, dass** das Netzwerk, Gewebe oder dgl. (3) mit dem Clipelement (2, 2a) verklebt oder verschweißt ist.

3. Befestigungselement nach Anspruch 1 oder 2, **dadurch gekennzeichnet, dass** das Netzwerk, Gewebe oder dgl. (3) aus Polyethylen, Jute, Gaze, Vlies oder dgl. besteht.

4. Befestigungselement nach einem der vorhergehenden Ansprüche, **dadurch gekennzeichnet, dass** das Netzwerk, Gewebe oder dgl. (3) grobmaschig ist.

5. Befestigungselement nach einem der vorhergehenden Ansprüche, **dadurch gekennzeichnet, dass** das Netzwerk, Gewebe oder dgl. (3) an dem unteren Schenkel (4) des Clipelementes (2, 2a) befestigt ist.

6. Befestigungselement nach einem der vorhergehenden Ansprüche, **dadurch gekennzeichnet, dass** die Seitenschenkel (5, 5'; 5a, 5a') quer zum Längsspalt (7) elastisch ausgebildet sind.

7. Befestigungselement nach einem der vorhergehenden Ansprüche, **dadurch gekennzeichnet, dass** die Seitenschenkel (5, 5'; 5a, 5a') in ihrem an den unteren Schenkel (4) angrenzenden Bereich eine Ausnehmung (8, 8') aufweisen.

8. Befestigungselement nach einem der vorhergehenden Ansprüche, **dadurch gekennzeichnet, dass** der untere Schenkel (4) die Seitenschenkel (5, 5'; 5a, 5a') in Axialrichtung überragt und dass an dem unteren Schenkel (4, 4a) in axialer Verlängerung der Seitenschenkel (5, 5'; 5a, 5a') nach oben weisende Stege (9, 9') ausgebildet sind.

9. Schaumteil, insbesondere zur Verwendung als Auflage für Rückenlehnen, Sitzflächen oder dgl. von Fahrzeugsitzen, mit einem eingeschäumten Befestigungselement (1, 1a) nach einem der vorhergehenden Ansprüche zur Befestigung von Polsterbezügen.

## Claims

1. Fastening element for linking an upholstery cover (10, 10'), especially the seat cover of a vehicle seat, with a foamed upholstery element (14), with a clip element (2, 2a) that extends with holding sections (6, 6') across a thickened face edge area (13) of a profiled strip (11) or the like to which the upholstery cover (10, 10') is fastened, wherein the clip element (2, 2a) is essentially formed as a U-shape with two lateral branches (5, 5', 5a, 5a') ascending from a lower branch (4, 4a) in direction towards the profiled strip (11), which comprise inwardly projecting holding sections (6, 6') at their upper ends, in between of which a longitudinal gap (7) is formed that is penetrated by the profiled strip (11), the width of which gap is less than the thickness of thickened face edge area (13) of the profiled strip (11), and wherein a mesh, fabric or the like (3) that projects from the clip element (2, 2a) is fastened to the clip element (2, 2a), through which the fastening element (1, 1a) can be held inside the foamed upholstery element (14), **characterized in that** the lateral branches (5a, 5a') are arranged in disalignment to one another along an axis A of the longitudinal gap (7).

2. Fastening element according to claim 1, **characterized in that** the mesh, fabric or the like (3) is glued or welded to the clip element (2, 2a).

3. Fastening element according to claim 1 or 2, **characterized in that** the mesh, fabric or the like (3) is made of polyethylene, jute, gaze, fleece or the like.

4. Fastening element according to any of the preceding claims, **characterized in that** the mesh, fabric or the like (3) is wide-meshed.

5. Fastening element according to any of the preceding claims, **characterized in that** the mesh, fabric or the like (3) is attached to the lower branch (4) of the clip element (2, 2a).

6. Fastening element according to any of the preceding claims, **characterized in that** the lateral branches (5, 5'; 5a, 5a') are formed elastically traverse to the longitudinal gap (7).

7. Fastening element according to any of the preceding claims, **characterized in that** the lateral branches (5, 5'; 5a, 5a') comprise a recess (8, 8') within their portion adjacent to the lower branch (4).

8. Fastening element according to any of the preceding claims, **characterized in that** the lower branch (4) extends over the lateral branches (5, 5'; 5a, 5a) in axial direction and that upwardly facing ridges (9, 9') are formed on the lower branch (4, 4a) in axial extension of the lateral branches (5, 5'; 5a, 5a').

9. Foam element, especially for use as a cover layer for backs, seatings or the like of vehicle seats, with a fastening element (1, 1a) laid in foam according to one of the preceding claims for the fastening of upholstery covers.

## Revendications

1. Elément de fixation pour relier un garnissage (10, 10'), en particulier un garnissage de siège d'un siège de véhicule, avec un élément de rembourrage en mousse (14), avec un élément d'agrafe (2, 2a) qui recouvre par des sections de retenu (6, 6') une section d'arête frontale agrossie (13) d'une bande profilée (11) ou autres à laquelle est fixé le garnissage (10, 10'), l'élément d'agrafe (2, 2a) étant essentiellement formé en forme de U avec deux branches latérales (5, 5'; 5a, 5a') s'élevant d'une branche inférieure (4, 4a) en direction de la bande profilée (11) qui comprennent à leurs extrémités supérieures des sections de retenu (6, 6') s'étendant vers l'intérieur, entre lesquelles est formée une fente longitudinale (7) pénétrée par la bande profilée (11) dont la largeur du fente est inférieure à l'épaisseur de la section d'arête frontale agrossie (13) de la bande profilée (11), et un treillis, tissu ou autres (3) s'étendant au-delà de l'élément d'agrafe (2, 2a) étant fixé à l'élément d'agrafe (2, 2a), à travers lequel l'élément de fixation (1, 1 a) peut être tenu dans l'élément de rembourrage en mousse (14), **caractérisé en ce que** les branches latérales (5a, 5a') sont arrangées de façon décalé l'une par rapport à l'autre le long d'un axe A de la fente longitudinale (17).

2. Elément de fixation selon la revendication 1, **caractérisé en ce que** le treillis, tissu ou autres (3) est collé ou soudé à l'élément d'agrafe (2, 2a).

3. Elément de fixation selon la revendication 1 ou 2, **caractérisé en ce que** le treillis, tissu ou autres (3) est constitué de polyéthylène, jute, gaze, toison ou autres.

4. Elément de fixation selon une des revendications précédentes, **caractérisé en ce que** le treillis, le tissu ou autres (3) possède de grandes mailles.

5. Elément de fixation selon une des revendications précédentes, **caractérisé en ce que** le treillis, tissu ou autres (3) est fixé à la branche inférieure (4) de l'élément d'agrafe (2, 2a).

6. Elément de fixation selon une des revendications précédentes, **caractérisé en ce que** les branches latérales (5, 5'; 5a, 5a') sont formées de façon élastique au travers de la fente longitudinale (7).

7. Elément de fixation selon une des revendications précédentes, **caractérisé en ce que** les branches latérales (5, 5'; 5a, 5a') comprennent un creux (8, 8') dans leur zone voisine à la branche inférieure (4).

8. Elément de fixation selon une des revendications précédentes, **caractérisé en ce que** la branche inférieure (4) surpasse les branches latérales (5, 5'; 5a, 5a') en direction axiale et **en ce que** des arêtes (9, 9') tournées vers le haut sont formées sur la branche inférieure (4, 4a) en prolongement axial des branches latérales (5, 5'; 5a, 5a').

9. Elément en mousse, en particulier pour l'utilisation comme revêtement de dossier de place assise ou autres de sièges de véhicule, avec un élément de fixation (1, 1a) coulé en mousse selon une des revendications précédentes pour la fixation de garnissage.
